# EUROPÄISCHE PATENTANMELDUNG

(11) **EP 0 761 626 A1**
(43) Veröffentlichungstag der Anmeldung: **12.03.1997**
(21) Anmeldenummer: 95114271.0
(22) Anmeldetag: 11.09.1995
(51) Int. Cl.: C05F 9/00

(54) **Verfahren zum Behandeln biogener Abfallstoffe**

(71) Anmelder: Thiele, Jürgen, 23570 Lübeck-Travemünde (DE)
(72) Erfinder: Thiele, Jürgen, 23570 Lübeck-Travemünde (DE)
(74) Vertreter: Glawe, Delfs, Moll & Partner

(57) **Zusammenfassung**

Bei dem erfindungsgemäßen Verfahren zur Behandlung von biologischen Abfällen werden diese mittels eines Heißgasstroms auf eine Temperatur zwischen 121°C und ihrer Verkohlungstemperatur erhitzt und auf eine Restfeuchte von unterhalb 20 Gew.-% gebracht. Das so erhaltene Material ist keimfrei und findet beispielsweise Verwendung für die Herstellung eines Trägermaterials für biologische Festbettreaktoren zur Abluftreinigung.

## Beschreibung

Die Erfindung betrifft ein Verfahren zum thermischen Behandeln von biologisch abbaubaren Stoffen, die durch dieses Verfahren erhältlichen Materialien sowie verschiedene Verwendungen dieser Materialien.

Zum Zwecke der Reduzierung des Müllvolumens und damit einer Entlastung der Deponien strebt man an, biologisch abbaubare Stoffe (sogenannten Biomüll) von übrigen Abfallstoffen zu trennen und einer gesonderten Behandlung zuzuführen. Zu diesem Zweck ist vielerorts bereits eine getrennte Sammlung des Biomülls im Haushalt eingeführt worden.

Ein übliches und aus offenkundiger Vorbenutzung bekanntes Verfahren zum Verarbeiten des Biomülls ist die Kompostierung. Größere, im kommerziellen Maßstab arbeitende Kompostieranlagen benötigen ungefähr zehn Wochen, um angelieferten Biomüll zu Kompost zu verarbeiten. Ihr Platzbedarf ist erheblich, zudem geht von ihnen regelmäßig eine Geruchsbelästigung aus. Da Biomüll regelmäßig pathogene Mikroorganismen enthält, können Kompostieranlagen eine Quelle von Krankheitserregern sein.

Es ist bereit vorgeschlagen worden (DE-A-26 16 162, DE-A-41 31 101), Biomüll zu trocknen, um daraus Dünger bzw. ein sogenanntes "Abfallpulver" herzustellen. Der genannte Stand der Technik enthält keine konkreten Offenbarungen hinsichtlich der zu verwendenden Trocknungsverfahren und -bedingungen. Das Problem der Pathogenität des Biomülls wird nicht erwähnt.

Der Erfindung liegt die Aufgabe zugrunde, ein Verfahren der eingangs genannten Art zu schaffen, daß eine einfache, im Vergleich zum Kompostieren schnelle und kostengünstige Verarbeitung biologisch abbaubarer Stoffe zu einem im wesentlichen keimfreien Endprodukt ermöglicht.

Die Erfindung löst diese Aufgabe dadurch, daß die biologisch abbaubaren Stoffe durch einen Heißgasstrom auf eine Temperatur zwischen 121°C und ihrer Verkohlungstemperatur erhitzt werden und in diesem Temperaturbereich gehalten werden, bis die Restfeuchte auf einen Wert von maximal 20 Gew.-% abgesunken ist.

Entscheidendes Merkmal der Erfindung ist die Erwärmung auf mindestens 121°C mittels eines Heißgasstroms. Durch Erwärmen auf wenigstens diese Temperatur wird der Biomüll im wesentlichen keimfrei gemacht, alle Mikroorganismen wie beispielsweise Bakterien und Pilzsporen werden abgetötet. Im wesentlichen keimfrei ist im Rahmen der Erfindung so zu verstehen, daß die Besiedelung des Endprodukts mit Mikroorganismen auf ein Maß zurückgeführt ist, daß davon für einen erwachsenen Menschen mit intaktem Immunsystem keinerlei Infektionsgefahr mehr ausgeht. Es sei angemerkt, daß dieser im wesentlichen keimfreie Zustand unmittelbar nach der erfindungsgemäßen thermischen Behandlung vorhanden ist, daß aber natürlich nicht ausgeschlossen ist, daß das Endprodukt durch eine etwaige Wiederbesiedelung mit neuen Mikroorganismen seine Keimfreiheit verliert.

Im Rahmen der Erfindung ist es wichtig, daß die Temperatur von wenigstens 121°C in der gesamten Masse des Biomülls erreicht wird, da nur so eine entsprechende Keimabtötung sichergestellt ist. Es ist nicht ausreichend, den Müll nur an seiner Oberfläche auf diese Temperaturen zu erwärmen. Da eine nennenswerte Verbrennung oder Verkohlung des Biomülls im Rahmen des erfindungsgemäßen Verfahrens nicht auftreten soll, darf dieser Müll im Rahmen der Erfindung nicht über die Verkohlungstemperatur hinaus erhitzt werdne.

Als Heißgas verwendet die Erfindung zweckmäßigerweise Verbrennungsgase aus einer Gas-, Öl- oder Feststofffeuerung. Jedoch ist es im Rahmen der Erfindung auch möglich, in einem Wärmetauscher erwärmte Gase wie beispielsweise Luft entweder ausschließlich oder den Verbrennungsgasen beigemischt zu verwenden. Die Fließgeschwindigkeit des Heißgasstroms durch den Behandlungsraum wird zweckmäßigerweise auf eine solche Stärke eingestellt, daß leichte und demgemäß schnell trocknende Müllbestandteile durch diesen Gasstrom verhältnismäßig schnell wieder ausgetragen werden. Da zur Erzielung einer schnellen Erwärmung des Biomülls das Heißgas in der Regel eine deutlich höhere Temperatur haben wird, als diejenige Temperatur, auf die der Müll erwärmt werden soll, wird durch diesen schnellen Austrag leichter Bestandteile wie beispielsweise Laubblätter vermieden, daß diese sich unzulässig stark erhitzen und möglicherweise entzünden oder verkohlen.

Durch das Trocknen des Biomülls auf eine Restfeuchte von unterhalbe 20 Gew.-% erhält man ein körniges, streufähiges Endprodukt, dessen weitere mögliche Verarbeitungen und Verwendungen weiter unten noch ausgeführt werden.

Aus DE-B-25 06 795 ist zwar schon ein Verfahren zur Trocknung von Biomüll bekannt, das jedoch wesentlich aufwendiger als die vorliegende Erfindung arbeitet und insbesondere keine Keimfreiheit gewährleisten kann. Bei diesem Verfahren wird extrudierter Biomüll zunächst auf einen Feuchtigkeitsgehalt von etwa 55 % vorgetrocknet, anschließend erfolgt eine weitere Behandlung auf einem Schüttelrost. Die DE-B-25 06 795 lehrt jedoch, die Trocknung immer nur soweit zu führen, daß lediglich eine Trocknung der Oberflächenbereiche erreicht wird und der Kern des Mülls dementsprechend noch feucht ist. Ein Feuchtigkeitsausgleich soll dann durch anschließende Lagerung in sogenannten Ruhebehältern erfolgen. Eine Durchwärmung des gesamten Produkts wird ausdrücklich als nachteilig bezeichnet.

Die vorliegende Erfindung lehrt demgegenüber eine Durchwärmung des Biomülls insgesamt auf Temperaturen von mindestens 121°C und hat erkannt, daß sich durch diese Maßnahme Keimfreiheit erreichen läßt, ohne die Qualitäten des Endprodukts nachteilig zu beeinflussen.

Vorzugsweise wird der Biomüll auf Temperaturen zwischen 130 und 150°C erhitzt. In diesem Temperaturbereich findet einerseits eine sichere Keimabtötung statt, andererseits ist kein unverhältnismäßig großer Energieaufwand erforderlich.

Die Behandlung wird vorzugsweise bis zu einer Restfeuchte von maximal 13 %, weiter vorzugsweise maximal 10 % durchgeführt, sie kann auch bis zu einer Restfeuchte von zwischen etwa 0,2 und 5 % durchgeführt werden. Bei verhältnismäßig niedrigem Feuchtigkeitsgehalt ist eine gute Schütt- und Lagerfähigkeit des Endprodukts gegeben.

Die durchschnittliche Verweilzeit der zu behandelnden Stoffe im Behandlungsraum liegt vorzugsweise zwischen zehn und dreißig Minuten, weiter vorzugsweise zwischen fünfzehn und zwanzig Minuten. Es versteht sich, daß dies nur Durchschnittsangaben sein können, da sehr leichte Müllbestandteile mit großer Oberfläche sehr schnell trocknen und durch den Heißgasstrom wieder aus dem Behandlungsraum ausgetragen werden können.

Die Anfangsfeuchte der zu behandelnden Stoffe sollte vorzugsweise 80 Gew.-% nicht überschreiten, vorzugsweise liegt sie bei maximal 70 Gew.-%, weiter vorzugsweise zwischen 50 und 70 Gew.-%. Häufig wird ein Feuchtegehalt der Ausgangsstoffe von etwa 65 bis 70 Gew.-% vorliegen. Da das erfindungsgemäße Verfahren Biomüll vielen verschiedenen Quellen verarbeiten kann (beispielsweise aus privaten Haushalten, Gartenbaubetrieben, Märkten oder Verarbeitungsbetrieben, wird es vorkommen, daß auch Biomüll mit einem sehr hohen Feuchtigkeitsgehalt angeliefert wird. In diesen Fällen ist es zweckmäßig, vor der thermischen Behandlung Biomüll aus verschiedenen Quellen zu mischen, um einen Feuchtigkeitsgehalt vorzugsweise im Bereich von 65 bis 70 Gew.-% einzustellen. Als verhältnismäßig trockene Bioabfälle zum Senken des Feuchtigkeitsgehalts eignen sich beispielsweise zerkleinertes Altholz, Flachs, Rindenmulch oder ähnliches.

Vorzugsweise beträgt die Temperatur des Heißgases beim Eintritt in den Behandlungsraum 300 bis 450 °C, weiter vorzugsweise 350 bis 400 °C. Mit einem Heißgas in diesem Temperaturbereich erreicht man einerseits eine zügige Erwärmung des Biomülls auf die geforderten Mindesttemperaturen und vermeidet andererseits, daß Verkohlung oder Verbrennung im unzulässigen Maße auftritt. Beim Austritt des Heißgases aus dem Behandlungsraum weist dieses vorzugsweise eine Temperatur zwischen 130 und 200°C, weiter vorzugsweise zwischen 140 und 160°C auf. Es liegt also ein entsprechender Temperaturgradient des Heißgases zwischen Gasein- und -austritt im Behandlungsraum vor. Die Gastemperatur am Gasaustritt sollte einerseits noch etwas über der erforderlichen Mindesttemperatur von 121°C für den Biomüll liegen, sie sollte andererseits aber auch nicht zu hoch liegen, um unnötigen Energieverbrauch zu vermeiden.

Im Rahmen der Erfindung ist die kontinuierliche Durchführung der thermischen Behandlung des Biomülls besonders bevorzugt. Zu diesem Zweck kann die thermischen Behandlung in einer rotierenden Trommel erfolgen. Der Innenraum der vorzugsweise im wesentlichen zylindrischen Trommel bildet den Behandlungsraum. Die Trommel wird um ihre Zylinderachse gedreht. Die Trommel kann gegenüber der Horizontalen leicht geneigt sein, vorzugsweise im Bereich 0 bis 20°. Es sei angemerkt, daß sich diese Winkelangabe auf die Drehachse der Trommel bezieht. Bevorzugt sind sehr geringe Neigungswinkel, die beispielsweise ein Gefälle der Zylinderwände von einigen Millimetern oder Zentimetern pro Meter Trommellänge bewirken.

Bei einer besonders vorteilhaften Ausführungsform der Erfindung erfolgt eine kontinuierliche Beschickung der Trommel mit zu behandelnden Stoffen an einer ihrer Stirnseiten und eine kontinuierliche Entnahme der behandelten Stoffe an der gegenüberliegenden Stirnseite. Die Trommel ist dann zweckmäßigerweise so geneigt, daß sich ein leichtes Gefälle von der Aufgabe- zur Entnahmestirnseite einstellt. Der Heißgasstrom wird zweckmäßigerweise ebenfalls an der Aufgabestirnseite eingeblasen und an der Entnahmestirnseite abgeführt. Eine solche Trommel kann beispielsweise einen Innendurchmesser von etwa 0,6 m und eine Gesamtlänge von etwa 6,5 m aufweisen, sie kann mit einer Drehzahl von etwa 10 min-¹ gedreht werden. Eine Trommel dieser Größe eignet sich für einen Massenstrom (gemessen als aufgegebenes, feuchtes Behandlungsgut) von 120 kg·h⁻¹. Für höhere oder niedrigere Durchsatzmengen können Trommeln mit entsprechend anderen Abmessungen gewählt werden.

Sofern der zu behandelnde Biomüll eine sehr inhomogene Größenverteilung aufweist, kann vor der thermischen Behandlung eine Zerkleinerung zweckmäßig sein, damit eine gleichmäßige Durchwärmung des gesamten Biomülls sichergestellt ist und unnötig lange Verweildauern im Behandlungsraum vermieden werden. Diese Zerkleinerung erfolgt zweckmäßigerweise auf eine durchschnittliche Korngröße von maximal 100 mm, vorzugsweise maximal 50 mm, weiter vorzugsweise maximal 20 mm. Eine bevorzugte durchschnittliche Korngröße liegt zwischen 15 und 20 mm. Da es sich hier nur um Durchschnittsangaben handelt, ist nicht ausgeschlossen, daß gewisse Anteile des Biomülls auch nach der Zerkleinerung kleinere oder auch größere Korngrößen aufweisen.

Die Zerkleinerung kann beispielsweise mittels einer aus dem Stand der Technik bekannten Schneckenpresse erfolgen, die ähnlich wie ein Fleischwolf arbeitet. Die Schneckenpresse kann den Müll gegebenenfalls durch Siebe oder entsprechende Messeranordnungen pressen, um eine ausreichende Zerkleinerung zu erzielen. Gegebenenfalls läßt sich durch Verwendung der Schneckenpresse auch eine Teilentwässerung eines besonders feuchten Ausgangsmaterials erreichen.

Vorteilhaft ist im Rahmen der Erfindung die Zerkleinerung mittels eines ebenfalls im Stand der Technik bekannten Wasserstrahlschneiders. Der angelieferte Biomüll wird häufig noch gewisse Anteile sogenannter Störstoffe enthalten, bei diesen Störstoffen handelt es sich um nicht biologisch abbaubare Materialien wie beispielsweise Metalle, Glas oder Kunststoffe. Diese Störstoffe weisen üblicherweise eine höhere Härte als die biologisch abbaubaren Materialien auf. Die Intensität des Wasserstrahls läßt sich so einstellen, daß zwar das biologische Material auf die gewünschte Korngröße zerkleinert wird, daß aber die Störstoffe darin unzerkleinert verbleiben. Dies erleichert ein etwaiges Abtrennen der Störstoffe vor der thermischen Behandlung beispielsweise mittels eines Siebes oder auch durch magnetisches Abtrennen von Metallen.

Entsprechend kann im Rahmen der Erfindung vorgesehen sein, daß vor der thermischen Behandlung eine Abtrennung nicht biologisch abbaubarer Störstoffe erfolgt, beispielsweise durch Absieben oder Magnetabscheider. Denkbar wäre unter Umständen auch eine Abscheidung durch Flotation.

Da das Ausgangsmaterial vor der thermischen Behandlung verhältnismäßig feucht und gegebenenfalls auch klebrig sein kann, ist eine ausreichende Abscheidung von Störstoffen vor der thermischen Behandlung nicht immer möglich. Es kann dann zweckmäßig sein, daß nach der thermischen Behandlung eine Abtrennung der Störstoffe beispielsweise durch die bereits genannten Methoden erfolgt. Da der thermisch behandelte Biomüll eine körnige Struktur mit vermindertem Feuchtigkeitsgehalt aufweist, ist eine solche Abtrennung einfacher möglich als vor der Behandlung. Gegebenenfalls kann auch eine Abtrennung von Störstoffen ausschließlich nach der thermischen Behandlung vorgesehen sein.

Je nach vorgesehener Weiterverwendung des thermisch behandelten Biomülls kann eine weitere Zerkleinerung nach dieser thermischen Behandlung zweckmäßig sein, die beispielsweise durch Mahlen erfolgen kann.

Das gemahlene Endprodukt kann, gegebenenfalls nach einer gewissen Wiederbefeuchtung, beispielsweise zu Formlingen gepreßt werden. Dabei können Bindemittel wie beispielsweise Klebstoffe, Polymere, Gelatine oder ähnliches zugesetzt werden. Die Formlinge können beispielsweise Pellets oder und noch näher zu erläuternde Bestandteile einer Verpackung sein.

Gegenstand der Erfindung ist ferner ein im wesentlichen keimfreies Material erhältlich durch thermisches Behandeln von biologisch abbaubaren Stoffen nach dem oben geschilderten Verfahren. Der im wesentlichen keimfreie Zustand liegt unmittelbar nach der Trocknung (vor einer etwaigen Wiederbesiedlung mit Mikroorganismen) vor und bedeutet, daß Mikroorganismen in diesem Material nur in einer solchen Menge vorhanden sind, daß der Kontakt mit und Handhabung des Materials für einen erwachsenen Menschen mit einem intakten Immunsystem ungefährlich ist. Die Konsistenz dieses Materials ist in der Regel körnig, sie kann, abhängig vom zur Herstellung eingesetzten Biomüll, auch faserig sein.

Dieses Material kann im Rahmen der Erfindung für verschiedene Zwecke verwendet werden.

Ein Verwendungzweck ist die Herstellung von Trägermaterial für einen Festbettreaktor zur biologischen Abluft- oder Abgasreinigung. Zu diesem Zweck kann entweder das nach der thermischen Behandlung erhaltene Material unmittelbar verwendet werden, bevorzugt ist jedoch, daß das Material befeuchtet, mit etwas Bindemittel versetzt und zu einem Granulat extrudiert wird.

Anschließend erfolgt eine Besiedelung des Extrudats mit zum biologischen Abbau der jeweiligen Schadstoffe geeigneten Mikroorganismen.

Es sei angemerkt, daß biologische Festbettreaktoren zur Abluftreinigung (auch Biofilter genannt) im Stand der Technik bekannt und vielfältig eingesetzt werden, beispielsweise zur Abluftreinigung von Klär- oder Kompostieranlagen. Als Trägermaterial für die Mikroorganismen werden im Stand der Technik überwiegend humusartige Stoffe genutzt, es sind aber auch Materialien wie Baumrinde, Reisig, Heidekraut und Stroh vorgeschlagen worden. Geeignete Mikroorganismen zur Besiedelung im Rahmen der erfindungsgemäßen Verwendung sind ebenfalls Stand der Technik.

Das erfindungsgemäße Material kann ferner zur Herstellung von Tierstreu, insbesondere Katzenstreu verwendet werden. Zu diesem Zweck wird es vorzugweise mit einem saugfähigen Bindemittel und gegebenenfalls Duftstoff vermischt und extrudiert. Aus dem erfindungsgemäßen Material können ferner Verpackungsmaterialien hergestellt werden, beispielsweise Schüttgranulate zum Schutz empfindlicher Gegenstände in ihrer Verpackung oder Blumentöpfe. Ebenfalls möglich ist eine Verwendung als Baumaterial. So läßt sich beispielsweise ein Dämm- oder Isoliergranulat durch Vermischen mit einem Bindemittel wie beispielsweise Mehl oder Gelatine und anschließendes Extrudieren herstellen. Dieses Granulat sollte vorzugweise in trockenen Bereichen (beispielsweise für Innenwände) Verwendung finden.

Besonders geeignet ist das erfindungsgemäße Material auch für die Herstellung eines Substrats für die Landwirtschaft und/oder den Gartenbau. So kann es beispielsweise, gegebenenfalls unter Einmischung von Humus, Kompost oder entsprechenden Langzeitdüngern, als Blumenerde verwendet werden. Ferner lassen sich aus dem Material durch Pressen (vorzugsweise unter Zumischung von Langzeitdüngern) Pflanztöpfchen, Saatringe und Pressballen für Keimlinge herstellen.

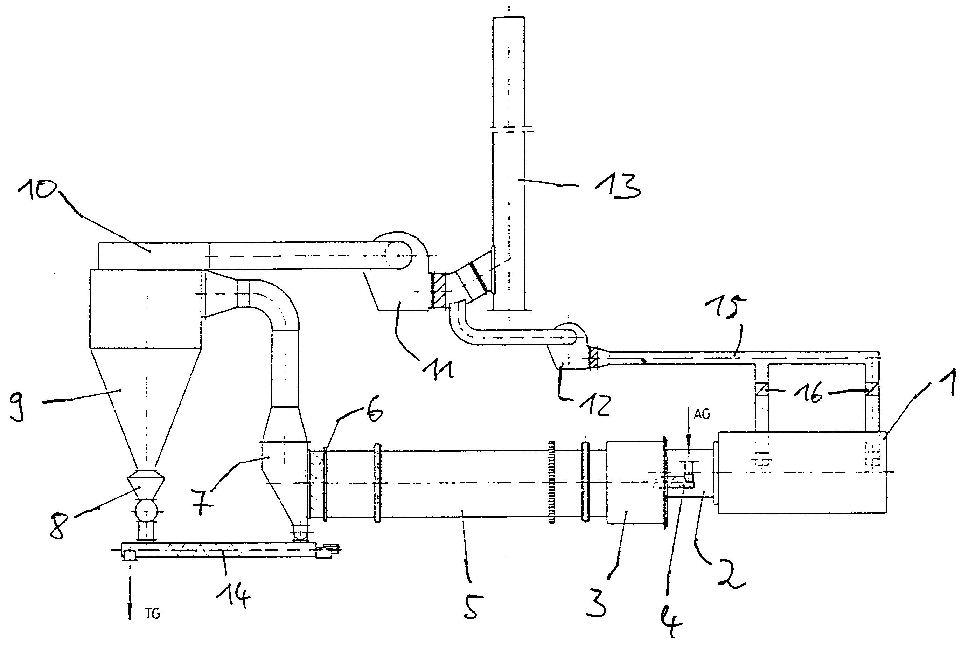

Ein Ausführungsbeispiel der Erfindung wird im folgenden anhand der Zeichnung erläutert, die schematisch eine Vorrichtung zur Durchführung des erfindungsgemäßen Verfahrens zeigt.

Die Abgase einer Feuerung 1 (beispielsweise einer Gas-, Öl- oder Kohlenstaubfeuerung) werden über den Trommelhals 2 und über die Trommelkopferweiterung 3, die mit einer Falschluftabdichtung versehen ist, in die Trockentrommel 5 geleitet. Beim Eintritt in die Trockentrommel 5 weisen die Abgase der Feuerung 1 eine Temperatur von etwa 380°C auf.

Die Aufgabe von zu behandelnden Biomüll wird durch den mit AG gekennzeichneten Pfeil angedeutet. Der gegebenenfalls zerkleinerte und auf den gewünschten Feuchtigkeitsgehalt eingestellte Biomüll wird über die Dichtschnecke 4 der Trommelkopferweiterung 3 und damit der Trockentrommel 5 zugeführt. Die Trockentrommel 5 ist mit einem in der Zeichnung nicht dargestellten Antrieb zur Drehung derselben um ihre Längsachse versehen. An der Austrittsstirnseite der Trommel 5 ist die Auslaufzone 6 angeordnet. Das thermisch behandelte Material fällt durch das Ausfallgehäuse, das eine Falschluftabdichtung aufweist, in den Schneckenförderer 14 und tritt als getrocknetes Produkt an der mit dem Pfeil TG gekennzeichneten Stelle aus der Vorrichtung aus.

Das Heißgas, das im Bereich der Auslaufzone 6 noch eine Temperatur von 130 bis 150°C aufweist, strömt vom Ausfallgehäuse 7 nach oben in den Einzelzyklon 9, in dem eine Staubabscheidung stattfindet. Das Abgas strömt weiter durch die Abgasspirale 10 und wird vom Hauptventilator 11 durch den Kamin 13 ins Freie geblasen. Ein Teilstrom des Abgases wird vom Umluftventilator 12 angesaugt und über die Leitung 15 und Regelklappen 16 der Feuerung 1 zugeführt. Diese teilweise Abgasrezirkulation ermöglicht eine bessere Energieausnutzung. Der im Einzelzyklon 9 abgeschiedene Staub gelangt in den Staubbunker 8 und wird zusammen mit dem Trockengut bei TG abgeführt und gegebenenfalls einer Weiterverarbeitung zugeführt.

Von der Anlieferung des Biomülls bis zur Ausgabe des fertigen Trockengutes vergehen beim erfindungsgemäßen Verfahren nur etwa 1,5 Stunden. Da das erfindungsgemäße Verfahren somit schnell und mit hohem Durchsatz arbeiten kann, entfällt eine aufwendige und teuere Zwischenlagerung angelieferten Biomülls. Die kontinuierliche Arbeitsweise ermöglicht einen kostengünstigen Betrieb.

Aus dem aus der Trockenanlage entnommenen Trockengut kann auf folgende Weise ein Trägermaterial für biologische Festbettreaktoren hergestellt werden:

100 Gewichtsteile des thermisch behandelten Biomülls, 5 Gewichtsteile Mehl, 5 Gewichtsteile Gelatine und 20 Gewichtsteile Wasser werden miteinander vermischt. Nach einer gewissen Einweichzeit wird das Material zu ungefähr walnußgroßen Pellets extrudiert und bei 150°C getrocknet. Diese Pellets oder Granulate eignen sich für die Besiedelung mit Mikroorganismen und dementsprechnd als Trägermaterial für biologische Festbettreaktoren.

## Patentansprüche

1. Verfahren zum thermischen Behandeln von biologisch abbaubaren Stoffen, dadurch gekennzeichnet, daß die Stoffe in einem Behandlungsraum (5) durch einen Heißgasstrom auf eine Temperatur zwischen 121°C und der Verkohlungstemperatur erhitzt werden und in diesem Temperaturbereich gehalten werden, bis die Restfeuchte auf einen Wert von maximal 20 Gew.-% abgesunken ist.

2. Verfahren nach Anspruch 1, dadurch gekennzeichnet, daß die Stoffe auf eine Temperatur zwischen 130 und 150°C erhitzt werden.

3. Verfahren nach Anspruch 1 oder 2, dadurch gekennzeichnet, daß die Behandlung bis zu einer Restfeuchte von maximal 13 Gew.-%, vorzugsweise maximal 10 Gew.-% erfolgt.

4. Verfahren nach einem der Ansprüche 1 bis 3, dadurch gekennzeichnet, daß die durchschnittliche Verweilzeit der zu behandelnden Stoffe im Behandlungsraum (5) zwischen zehn und dreißig Minuten, vorzugsweise zwischen fünfzehn und zwanzig Minuten liegt.

5. Verfahren nach einem der Ansprüche 1 bis 4, dadurch gekennzeichnet, daß die Anfangsfeuchte der zu behandelnden Stoffe maximal 80 Gew.-%, vorzugsweise maximal 70 Gew.-%, weiter vorzugsweise zwischen 50 und 70 Gew.-% beträgt.

6. Verfahren nach einem der Ansprüch 1 bis 5, dadurch gekennzeichnet, daß die Temperatur des Heißgases beim Eintritt in den Behandlungsraum (5) 300 bis 450°C, vorzugsweise 350 bis 400°C beträgt.

7. Verfahren nach einem der Ansprüche 1 bis 6, dadurch gekennzeichnet, daß die Temperatur des Heißgases beim Austritt aus den Behandlungsraum 5 zwischen 130 und 200°C, vorzugsweise zwischen 140 und 160°C beträgt.

8. Verfahren nach einem der Ansprüche 1 bis 7, dadurch gekennzeichnet, daß die thermische Behandlung in einer rotierenden Trommel (5) erfolgt.

9. Verfahren nach Anspruch 8, dadurch gekennzeichnet, daß der Neigungswinkel der Trommel (5) zur Horizontalen 0 - 20° beträgt.

10. Verfahren nach Anspruch 8 oder 9, dadurch gekennzeichnet, daß eine kontinuierliche Beschickung der Trommel (5) mit zu behandelnden Stoffen an einer Stirnseite der Trommel (5) und eine kontinuierliche Entnahme der behandelten Stoffe an der gegenüberliegenden Stirnseite erfolgt.

11. Verfahren nach einem der Ansprüche 1 bis 10, dadurch gekennzeichnet, daß die zu behandelnden Stoffe vor der thermischen Behandlung auf eine durchschnittliche Korngröße von maximal 100 mm, vorzugsweise maximal 50 mm, weiter vorzugsweise maximal 20 mm zerkleinert werden.

12. Verfahren nach Anspruch 11, dadurch gekennzeichnet, daß die Zerkleinerung mittels eines Wasserstrahlschneiders erfolgt.

13. Verfahren nach Anspruch 11, dadurch gekennzeichnet, daß die Zerkleinerung mittels einer Schneckenpresse erfolgt.

14. Verfahren nach einem der Ansprüche 1 bis 13, dadurch gekennzeichnet, daß vor der thermischen Behandlung eine Abtrennung nicht biologisch abbaubarer Störstoffe erfolgt.

15. Verfahren nach einem der Ansprüche 1 bis 14, dadurch gekennzeichnet, daß nach der thermischen Behandlung eine Abtrennung nicht biologisch abbaubarer Störstoffe erfolgt.

16. Verfahren nach einem der Ansprüche 1 bis 15, dadurch gekennzeichnet, daß die thermisch behandelten Stoffe nach dieser Behandlung zerkleinert werden.

17. Verfahren nach Anspruch 16, dadurch gekennzeichnet, daß die Zerkleinerung durch Mahlen erfolgt.

18. Verfahren nach einem der Ansprüche 1 bis 17, dadurch gekennzeichnet, daß die thermisch behandelten Stoffe zu Formlingen gepreßt werden.

19. Verfahren nach Anspruch 18, dadurch gekennzeichnet, daß vor dem Pressen ein Bindemittel beigemischt wird.

20. Im wesentlichen keimfreies Material, erhältlich durch thermisches Behandeln von biologisch abbaubaren Stoffen nach einem Verfahren gemäß einem der Ansprüche 1 bis 18.

21. Verwendung des Materials gemäß Anspruch 20 zur Herstellung von Trägermaterial für einen Festbettreaktor zur biologischen Abluft- oder Abgasreinigung.

22. Verwendung des Materials gemäß Anspruch 20 zur Herstellung von Tierstreu, insbesondere Katzenstreu.

23. Verwendung des Materials gemäß Anspruch 20 zur Herstellung von Verpackungsmaterial.

24. Verwendung des Materials gemäß Anspruch 20 zur Herstellung von Baumaterial.

25. Verwendung des Materials gemäß Anspruch 20 zur Herstellung eines Substrats für die Landwirtschaft und/oder den Gartenbau.
